# EUROPEAN PATENT APPLICATION

(11) **EP 2 851 890 A1**
(43) Date of publication of application: **25.03.2015**
(21) Application number: 14183616.3
(22) Date of filing: 04.09.2014
(51) Int. Cl.: G09B 5/00

(54) **System and method for providing augmentation based learning content**

(30) Priority: 10.09.2013 IN MU29152013
(71) Applicant: Tata Consultancy Services Limited, Maharashtra (IN)
(72) Inventor: Pedanekar, Niranjan, 411013 Maharashtra (IN); Banahatti, Vijayanand Mahadeo, 411013 Maharashtra (IN); Karande, Shirish Subhash, 411013 Maharashtra (IN); Kumar, Varun, 411013 Maharashtra (IN); Doke, Abhay Tanaji, 411013 Maharashtra (IN)
(74) Representative: Potter Clarkson LLP

(57) **Abstract**

The present subject matter discloses a system and a method for providing augmented based learning content to a user. Based on a learning source referred by the user, the system is enabled to extract topics for fetching learning contents from online or offline resources such as internet or system's database respectively. Thus, the learning source may get augmented by fetching the learning contents from said online or offline sources. Further, information layers may be generated based on topics/subject being read by the user. The information layers generated may get populated with the learning content fetched. Thereafter, the system may be enabled for matching the learning contents populated in the information layers with profile of the user stored in a user profile database. Based upon matching, the learning contents may be conceived and may be delivered to the user. The delivered learning content is personalized to the user.

## Description

### CROSS-REFERENCE TO RELATED APPLICATIONS AND PRIORITY

The present application claims priority to Indian Provisional Patent Application No. 2915/MUM/2013, filed on September 10, 2013, the entirety of which is hereby incorporated by reference.

### TECHNICAL FIELD

The present subject matter described herein, in general, relates to a method and a system for displaying personalized learning content on an online learning platform.

### BACKGROUND

Education plays a key role in a development of a nation and thus, it is considered as a backbone for the nation's development. With the advent of internet, online learning has been utilized as an alternative means of conventional learning and has been implemented successfully across the globe. A number of online learning systems have been developed and are being used for facilitating the education in the society. Through the use of the online learning systems, providing personalized learning has become possible. However, in developing countries like India where pupil-per-teacher ratio is high, implementing the personalized learning is a major challenge. The personalized learning requires creating variety of learner-specific learning contents and also updating such learning contents based on the learner's requirement.

In today's learning environment, the learners may still have to rely on learning sources such as paper text books, articles, research paper, white paper, e-articles, e-books a video course, a presentation, internet web pages, intranet web pages, computer-based training (CBT) course, learning management software (LMS) etc., authorized or recommended by various authorizing bodies including universities, educational institutes, and educational boards etc. Such dependency of relying on the learning sources may reduce the viability of the online learning systems. Moreover, the learning source like the paper text books add more technical challenges and limitations for the online learning systems. These challenges restrict the learner from grasping a term, phrase, sentences or any topic which he/she may be reading for that instance. Each time, the learner may have to visit various online sources to get the proper answer for his/her queries. All these, may deviate the learner's concentration and may also consumes a lot of time.

Even though, various online learning tools may be available for providing the learning contents from the different online sources, the arrangement of such learning contents in a structured manner may be an another challenge. With the increase in learner's density and number of subjects/topics, the online learning systems may also have to face various scalability issues.

### SUMMARY

This summary is provided to introduce aspects related to systems and methods for providing augmentation based personalized learning content and the concepts are further described below in the detailed description. This summary is not intended to identify essential features of subject matter nor is it intended for use in determining or limiting the scope of the subject matter.

In one implementation, a system for delivering a learning content to a user is disclosed. The system comprises a processor and a memory coupled to the processor. The processor may be capable for executing a plurality of modules stored in the memory. The plurality of modules comprises an extracting module, a generating module, a search module, a populating module, and a delivery module. The extracting module may be configured to identify a page referred by the user while accessing a learning source. Upon page identification, the extracting module may be further configured to extract one or more topics from the page identified. The one or more topics extracted may be associated with a particular subject of user's interest. Further, the generating module may be configured to generate one or more information layers corresponding to the one or more topics extracted, and the one or more information layers indicates meaningful abstraction of information related to the one or more topics. The generating module may be further configured to generate a profile of the user based on one or more attributes indicating a learning style of the user. Further, the search module may be configured to perform a search on one or more resources based on the one or more topics extracted, and the search performed results in retrieval of the learning content. Further, the populating module may be configured to populate the one or more information layers with the learning content retrieved from the search. Further, the delivery module may be configured to deliver the learning content to the user based upon the profile of the user. The learning content is delivered via the one or more information layers.

In another implementation, a method for delivering a learning content to a user is disclosed. The method comprises a step of identifying a page referred by the user while accessing a learning source. Further, a method may be provided for extracting one or more topics from the page identified, and the one or more topics may be associated with a particular subject of user's interest. Further, a method may be provided for generating one or more information layers corresponding to the one or more topics. The one or more information layers generated indicates a meaningful abstraction of information related to the one or more topics. The method may be further provided for generating a profile of the user based on one or more attributes indicating a learning style of the user. Upon generating the layers and the profile, a method may be provided for performing a search on one or more resources based on the one or more topics extracted, and the search performed may results in retrieval of the learning content. Further, a method may be provided for populating the one or more information layers with the learning content. Upon populating, a method may be provided for delivering, via the one or more information layers, the learning content to the user based upon the profile of the user.

Yet in another implementation a non-transitory computer readable medium embodying a program executable in a computing device for delivering a learning content to a user is disclosed. The non-transitory computer readable medium comprises a set of instructions, the instructions comprising instructions for identifying a page referred by the user while accessing a learning source. Further, a set of instructions may be provided for extracting one or more topics from the page identified, and the one or more topics are associated with a particular subject of user's interest. Further, a set of instructions may be provided for generating one or more information layers corresponding to the one or more topics. The one or more information layers indicate a meaningful abstraction of information related to the one or more topics. A set of instructions may be further provided for generating a profile of the user based on one or more attributes indicating a learning style of the user. Upon generating the layers and the profile, a set of instructions may be provided for performing a search on one or more resources based on the one or more topics extracted, and the search performed results in retrieval of the learning content. Further, a set of instructions may be provided for populating the one or more information layers with the learning content. Further, a set of instructions may be provided for delivering, via the one or more information layers, the learning content to the user based upon the profile of the user.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a network implementation of a system for providing augmentation based learning contents, in accordance with an embodiment of the present subject matter.
Figure 2 illustrates the system, in accordance with an embodiment of the present subject matter.
Figure 3 illustrates a detailed working of the system, in accordance with an embodiment of the present subject matter.
Figure 4 illustrates a method for providing augmentation based learning contents, in accordance with an embodiment of the present subject matter.

### DETAILED DESCRIPTION

Systems and methods for delivering a learning content to a user are described. The purpose of present disclosure is to deliver the learning content which may be personalized for the user in a structured manner. Furthermore, the present disclosure also discuss about augmenting existing or available learning contents before delivering it to the user. The user may be referred as a student/learner in one scenario and an administrator/teacher in another scenario. Usually, the user have to rely upon learning sources authorized or recommended by authorizing bodies including universities, educational institutes, and educational boards etc. Further, the learning sources may comprises physical text book, articles, research paper, white paper, e-articles, an e-book, a video course, a presentation, internet web pages, intranet web pages, computer-based training (CBT) course, learning management software (LMS) or other type of learning materials authorized from an authority. According to some embodiments of present subject matter, the learning source referred by the user may be non-authorized learning sources available in an online and offline environment. Due to such reliability on the learning sources, the user may not get satisfied to fulfill his/her requirements (learning requirements or administrative requirement). Further, different users may have different learning approaches/learning styles which may also not match by relying upon the learning sources only. To overcome such limitation, the present disclosure discloses about augmentation of the learning sources and thereafter delivering the augmented learning contents to the user based on his/her requirements.

In an administrator mode, a page referred by the user while accessing the learning source may be identified or located. From the page identified, one or more topics may be extracted from the page, and the topics may be associated with a particular subject of user's interest. The topics may be extracted based on text present on the page using a Named Entity Recognition (NER) technique. In one example, considering "history" as a subject, the topics may be like person, place, and events. More specifically, "Genghis Khan" as the person, "Agra" as the place, and "Battle of Panipat" as the event. After extracting the topics, different information layers may be generated for presenting the learning content to the user (in the learner mode) in a sequential and structured manner. The information layers may be defined in different categories, and in each category the learning content may be populated and presented to the user (in the learner mode). Some examples of layers are Wikipedia, Videos, Pictures, Blogs, Books, Legacy, Art and Literature, Map, Timeline, Presentations, Lectures, Forums, and Thesaurus.

Once the information layers are generated, an automated search may be performed to retrieve learning contents from online and offline sources like internet or internal database of the system, respectively. Based on the search, the learning contents retrieved may be further populated in the information layers. After populating the information layers, the user (learner) may interact with the system in a learner mode to get more detail information about the topic "Battle of Panipat" apart from what present in the learning sources (physical text book, articles, research paper, white paper, e-articles, an e-book, a video course, a presentation, internet web pages, intranet web pages, computer-based training (CBT) course, learning management software (LMS) etc.,). In the learner mode, the user may get the detail information through the information layers populated with the learning contents in a structured manner. For delivering the detail information, profile of the user in the learner mode may be generated. Based on the profile generated, the information layers along with the learning contents may be prioritized in a sequential and structured manner in order to be delivered to the user in the learner mode. Further, the generation of the layers leads to faster computing/processing of the system as the learning contents are populated in the layers in a structured format. Thus, saving the computing time required by the system for arranging the learning contents in the structured way.

While aspects of described system and method for delivering the learning content to the user may be implemented in any number of different computing systems, environments, and/or configurations, the embodiments are described in the context of the following exemplary system.

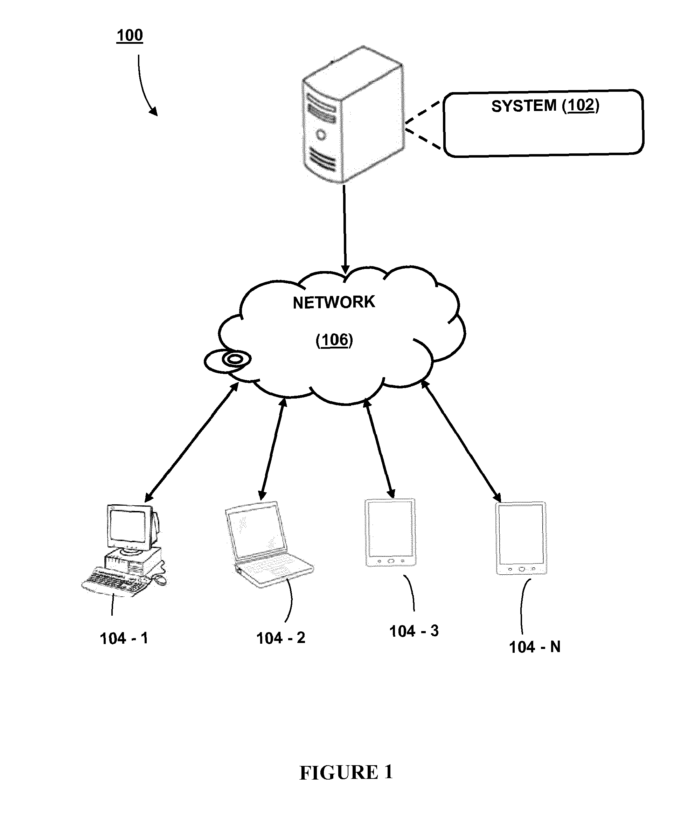

Referring to Figure 1, a network implementation 100 of system 102 for providing augmentation based learning content is illustrated, in accordance with an embodiment of the present subject matter. In one embodiment, the system 102 facilitates the learning contents in a structured manner. Although the present subject matter is explained considering that the system 102 is implemented for providing augmentation based learning contents on a server, it may be understood that the system 102 may also be implemented in a variety of computing systems, such as a laptop computer, a desktop computer, a notebook, a workstation, a mainframe computer, a server, a network server, a tablet, a mobile phone, and the like. In one embodiment, the system 102 may be implemented in a cloud-based environment. It will be understood that the system 102 may be accessed by multiple users through one or more user devices 104-1, 104-2...104-N, collectively referred to as user 104 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

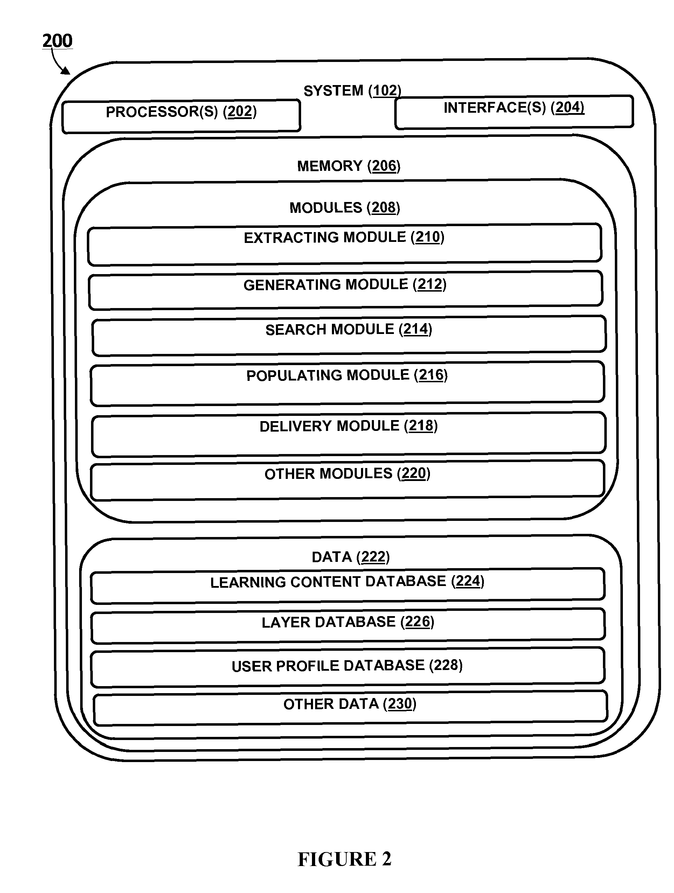

Referring now to Figure 2, the system 102 is illustrated in accordance with an embodiment of the present subject matter. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions or modules stored in the memory 206.

The I/O interface 204 may include a variety of software and hardware interfaces, for example, a web interface, a graphical user interface, and the like. The I/O interface 204 may allow the system 102 to interact with a user directly or through the client devices 104. Further, the I/O interface 204 may enable the system 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium or computer program product known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, a compact disks (CDs), digital versatile disc or digital video disc (DVDs) and magnetic tapes. The memory 206 may include modules 208 and data 222.

The modules 208 include routines, programs, objects, components, data structures, etc., which perform particular tasks or implement particular abstract data types. In one implementation, the modules 208 may include an extracting module 210, a generating module 212, a search module 214, a populating module 216, a delivery module 218, and other modules 220. The other modules 220 may include programs or coded instructions that supplement applications and functions of the system 102.

The data 222, amongst other things, serves as a repository for storing data processed, received, and generated by one or more of the modules 208. The data 222 may also include a learning content database 224, a layer database 226, a user profile database 228, and other data 230.

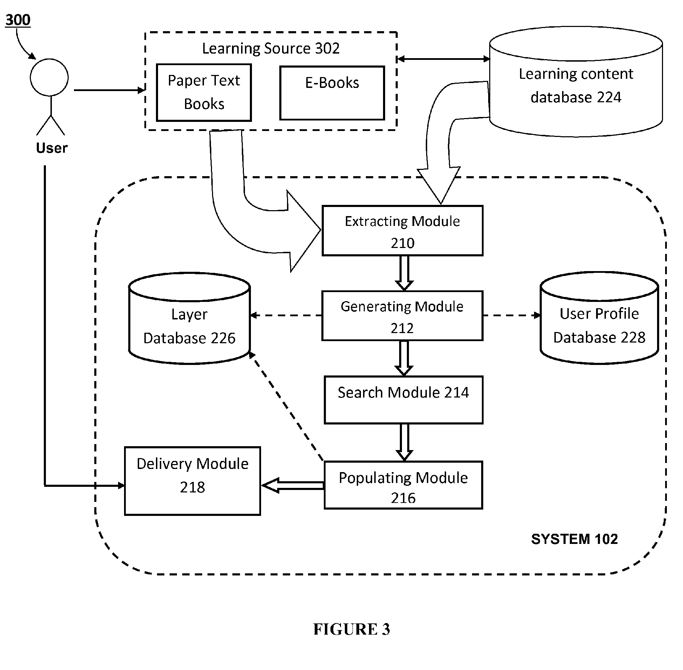

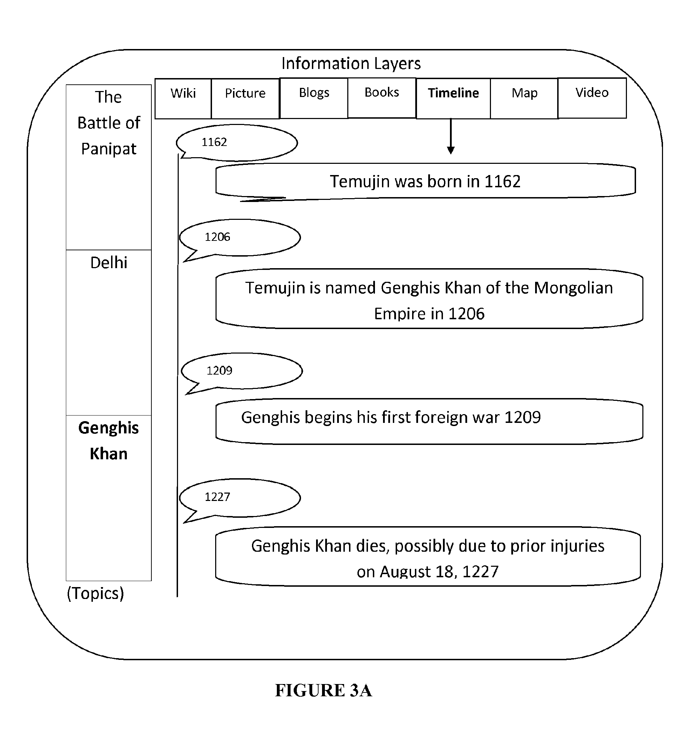

Referring now to Figure 3, illustrates detailed working of the system, in accordance with an embodiment of the present subject matter. The system 102 is provided for delivering augmentation based learning contents to a user. The learning contents delivered may be personalized to the user. In today's learning environment, the user may have to rely on learning source 302 which may be authorized by different authorizing bodies or institutes or boards or universities. The learning source 302 may comprise paper text books, articles, research paper, white paper, e-articles, e-books, a video course, a presentation, internet web pages, intranet web pages, computer-based training (CBT) course, learning management software (LMS) or other type of learning sources which the user may refer for learning. While referring such learning source 302, the user may get restricted to enhance his/her knowledge. The user may require additional information or additional learning contents to overcome such restrictions. Further, the learning contents required may have to be specific in order to match user's learning style or learning capability i.e., learning contents should be personalized to the user.

To provide such personalized learning contents, one of a module i.e., an extracting module 210 may be configured to identify page being referred by the user while accessing the learning source 302. Further, one or more topics from the page may be extracted, and the topics may be associated with a particular subject of user's interest. The, learning source 302 comprises paper text books, articles, research paper, white paper, e-articles, e-books, video courses, presentations, internet web pages, intranet web pages, computer-based training (CBT) course, learning management software (LMS), and other types of learning sources.

According to an embodiment of the present subject matter, when the user is referring the e-books from the user device 104, he/she may select a particular topic associated with a particular subject for learning. Based on the selected subject, related e-books may be displayed on the user device 104 to the user. The user may select and start reading a particular e-book of his/her choice. The e-book comprises a number of pages which may be flipped by the user. While reading the e-book, the user may require additional details or clarification on the topics in order to grasp the topic in a greater detail. In such situation, the extracting module 210 may be configured to detect current page being read or referred by the user by using a page detection mechanism. The page detection mechanism may easily locate the current page (which the user is reading) and can proceed for further analysis. Alternatively, when the user is referring the text paper book i.e., a physical book, the page detection mechanism may have to interact with an image capturing unit like camera, webcam, or other type of image capturing units attached to the user device 104 for the detection of the current page which is being read or referred by the user.

In such scenario, the image capturing unit (not shown in figure) of the user device 104 may be enabled to capture images of one or more pages of the paper text book being referred or accessed by the user. Upon capturing of the image of the page of the paper text book, the image is further processed through the page detection mechanism. Thus, in both the cases i.e., when the user is referring the e-book or the paper text book, the image of the current page (which the user is reading) may be captured for being processed by the extracting module 210. Further, the extracting module 210 matches the image captured for the current page with the learning content database 224. The learning content database 224 comprises previously stored images of the learning sources i.e., images of the e-books and the paper text books along with their page numbers.

Thus, by matching the image of the current page captured with the image of a reference page stored in the learning content database 224, the extracting module 210 may be able to detect or identify the exact page which the user is reading. After the page is identified, the extracting module 210 may be further configured to extract the one or more topics from the page detected. Further, the extraction of the one or more topics may be performed in an offline or an online environment. In the offline environment, the user in an administrator mode can define one or more topics based on his/her past experience on the particular subject. Further, the extraction of the one or more topics may also be performed while the user in a learner mode is reading a particular page of the paper text book or the e-book. According to some embodiments, the user in the learner mode may also be facilitated to provide a particular topic of his/her own choice. Based on the topic provided by the user, the system 102 may be further configured to generated information layers and populate the information layers with learning content. According to embodiments of the present subject matter, the topics may be extracted from a text of the page detected by using any one of a Named Entity Recognition (NER) technique. It may be noted to one skilled in the art that the system 102 may use other types of techniques/mechanism for identifying the topics from the page. For example, when the user is reading the subject like "History", the topics may be events, places and person, where the event may be "The battle of Panipat", the place may "Delhi" and the person may be "Genghis Khan". It may be noted that, according to embodiments of the present subject matter, there may number of different topics which may extracted by the extracting module 210 based on the subject being read by the user.

Thus, upon extracting the topics, a generating module 212 may be configured for generating one or more information layers corresponding to the one or more topics. According to the embodiments of the present subject matter, the one or more layers may be generated or defined as a meaningful abstraction of information built over the one or more topics of the learning source 302. In an embodiment, the meaningful abstraction of the information indicates that the one or more layers to be generated may be on basis of the subject or topic being read by the user, and one or more layers generated may be stored in a layer database 226 of the system 102. For example, the one or more layers generated for the subject "History" may be like ""Wiki, "Books", "Timelines", "Blogs", "Picture" etc, whereas, the one or more layers generated for the subject "Google Map" may be "Street", "Map", "Shops", "Restaurants", "ATMs", "Real-time traffic information", "Photos", and "Wiki". It may be clearly observed that the layers like "Shops", "Street", "Restaurants", "ATMs" will be only generated when the subject is chosen as "Google Maps" and not "History". According to embodiments of the present subject matter, the one or more information layers may also be generated by using previously stored layers stored in the layer database 226 based on the subject being read by the user. Some examples of the information layers for the subject "History" may be Wikipedia, Videos, Pictures, Blogs, Books, Legacy, Art and Literature, Map, Timeline, Presentations, Lectures, Forums and Thesaurus. It may be noted that, according to the embodiments of the present subject matter, the information layers may differ from one subject/topic to the other. In an another embodiment of the present subject matter, considering an example of a subject "Computer Science" having a topic "Object oriented programming (OOPs)", the layers generated may comprise "real time applications of the OOPs", "explanation of the OOPs using analogy", "Frequently Asked Questions (FAQs) related to the OOPs", "Code related to the OOPs", and "Schematic diagram" for the OOPs. The interface representing the generation of information layer in relative to the topics is shown in figure 3A. The information layers generated corresponding to the topics "The battle of Panipat", "Delhi" and "Genghis Khan" is shown in the figure 3A. Few of the information layers i.e., "Wiki", "Picture", "Blogs", "Books", "Timeline", and "Map" is shown in the figure 3A. Further, it can be observed from the figure 3A that the "Timeline" layer (information layer) automatically displays timelines with description related to historical events associated with the life of the topic "Genghis Khan". Thus, by this way, the system 102 displays the relevant information related to the different topics in a structured and sequential manner which ultimately the helps the user to enjoy/experience an improved user-interface. In one embodiment, the information layers displayed to the user may be dynamically restructured and/or rearranged based on the user profile. More particularly, the information layers arranged as tiles may dynamically switch individual positions on the interface and/or be replaced with another information layers in real time based on the user profile. In one example, for a user A having a user profile A, the information layers displayed on the interface may be different as compared to user B having a user profile B.

In one embodiment, the generating module 212 may be further configured to generate a profile of the user based on one or more attributes indicating a learning style or learning capability of the user. The one or more attributes may comprise at least one combination of "Extravert OR Introvert", "Sensing OR Intuition", "Thinking OR Feeling", and "Judging OR Perceiving". It may be noted that, according to embodiments of the present subject matter, there may be other attributes which may be used for defining the user's personality. Thus, the profile generated for the user is stored in a user profile database 228 of the system 102. Both, the information layers and the profile generated may be used for personalizing the learning contents.

Further, a search module 214 may be configured to perform a search on one or more resources through a network 106 such as internet, intranet or other types of online resources to fetch/retrieve the learning contents. The learning contents retrieved may be based on the one or more topics extracted corresponding to the particular subject. It may be noted that, the search module 214 may also be configured to perform the search on an offline resources. The offline resources may be internal databases stored in memory 206 of the system 102, and the internal databases may comprise relevant information which may be required for facilitating the learning content to the user. Thus, the current page of the learning source may get augmented by performing the search (online or offline or both) and fetching the learning contents based on the search performed.

The learning contents retrieved from different resources may be collected randomly i.e., in an unstructured form. This may lead to increase in computing/processing time while presenting or delivering the learning contents to the user based on user's requirement. In order to present the learning contents in a structured manner, a populating module 216 may be configured to populate the one or more information layers with the learning contents retrieved from the different resources. Further, the populating of the information layers may be performed in an offline and an online environment. In the offline environment, when the user (learner) is not interacting with the system 102, the populating of the information layers with learning contents may be performed periodically. The learning contents fetched may be stored in the internal database of the system 102. According to some embodiments, the learning contents populated in the information layers may be verified by the administrator in the offline environment. When the user in the learner mode interacts with the system 102, he/she may not have to wait for the information layers to get populated with the learning contents. The populating module 216 may either populate the information layers with learning contents fetched from the online resources or learning contents stored in the internal databases of the system 102 in the offline environment. Thus, the populating of the learning content in different information layers results in saving the computing/processing time of the system 102 while delivering the learning contents to the user, based on the user's learning style. It may be noted to a person skilled in art that for the each topic extracted, there may be learning contents available in different information layers. According to embodiments, the information layers may get populated for the each topic by using different resources. In one example, for the topic "Battle of panipat", the "Books" layer may be populated by performing a custom query to Google Books. Therefore, this approach may present a systematic and structured way to provide the learning contents to the user.

After populating the learning contents, the delivery module 218 may be configured to deliver the learning content to the user by personalizing the learning contents according to profile of the user stored in a user profile database 228. The user profile database 228 may be configured to store profiles for different users which may be interacting with the system 102. Further, the profile of the user may be created on basis of the user's learning style or the user's learning capability. Further, the profile of the user may also be created on basis of user's personal details previously stored in the user profile database 228. The user's personal details may comprise information about one or more user characteristics defining the user's personality. The information may further include one or more attributes which may define the user's personality. Further, the attributes may comprise at least one combination of "Extravert OR Introvert", "Sensing OR Intuition", "Thinking OR Feeling", and "Judging OR Perceiving". Thus, the delivery module 218 personalize the learning contents by selecting and prioritizing the information layers having the learning contents populated corresponding to the topics extracted with the profile of the user. Here, the learning contents populated in the layers get matched with the profile of the user and hence, the layers get prioritized on the basis of user's requirement. For example, if the user is more comfortable with videos (on basis of profile of user) for learning a particular topic associated with a subject, then learning contents present in the "Videos" layer may be prioritized and delivered to the user. Thus, by matching and prioritizing the layers with the profile, learning contents are provided to the user. After the learning contents being matched with the profile of the user, i.e., the learning content which specific to the user's learning style or the user's learning capability may be displayed to the user on a user-interface of the user device 104.

According to embodiments of present subject matter, the system 102 may work in two different modes i.e., "Administrator mode" and "User mode". Depending upon the two modes, the operation of the system 102 may vary. For example, in the User mode, the system 102 may perform different operations for assessment of the user's personality on basis of different parameters. In an embodiment of the present subject matter, the system 102 may use Myers-Brigg Type Indicator (MBTI) test for assessing the user's personality. It may be noted that, the present subject matter may be further enabled for using other techniques for assessing the user's personality. Further, in the User mode, a feedback mechanism may be provided for the users (learners) for enabling them to provide their feedback on the particular subject or topic being read by them. Through the feedback mechanism, the user may add/deleted/modify contents in the learning contents. Similarly, in the "Administrator mode", the system 102 may provide user-testing mechanism configured for testing the user's knowledge or understanding on a particular subject or a topic. The user-testing mechanism may create questionnaires or puzzles or other type of materials which may be used for testing the user's knowledge or skills on the particular subject or the topic. The user-testing mechanism may help the user in the Administrator mode in deciding on the learning contents to be provided to the user (learner) based on his/her skills.

According to embodiments of the present subject matter, the system 102 may identify the users referring the same learning contents and further may invite the users on a common platform to enable them to share their views, to chat, and to start a discussion on a specific topic. Further, according to an embodiment of the present subject matter, the system 102 may also create an in-built user-community platform configured for enhancing the user learning. The user-community platform may enable grouping a plurality of users into one or more groups on basis of profiles, learning capabilities, interests on particular subjects and/or topics, and learning contents. In one embodiment, the system 102 enables the user to perform a search on the user-community platform in order to identify a group matching with the profile of the user. Based upon the matching of the profile of the user with the group, the learning contents corresponding to the group identified may be provided to the user. During the search and identification of the group, the system 102 may also assign a score to each of the groups based on requirements of the user. The group having highest score may be identified and accordingly, the learning contents corresponding to the group identified may be provided to the user. This further enables in reduction of processing time of the system 102 since rather than retrieving the learning contents from the internet, the system may retrieve the learning contents stored in the memory 206 of the system 102 depending on the group identified relevant to the user's or learner's requirements from the user-community platform. Specifically, the processing time required by the system 102 in performing search on the internet for the retrieval of the learning contents may be conserved.

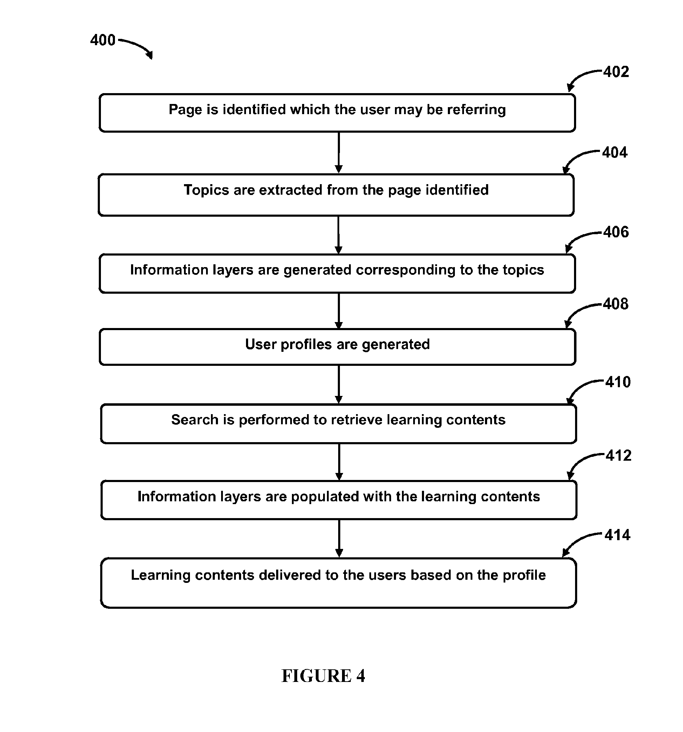

Referring now to Figure 4, the method for providing augmentation based learning content to the user based on the user's learning style is shown, in accordance with an embodiment of the present subject matter. The method 400 may be described in the general context of computer executable instructions. Generally, computer executable instructions can include routines, programs, objects, components, data structures, procedures, modules, functions, etc., that perform particular functions or implement particular abstract data types. The method 400 may also be practiced in a distributed computing environment where functions are performed by remote processing devices that are linked through a communications network. In a distributed computing environment, computer executable instructions may be located in both local and remote computer storage media, including memory storage devices.

The order in which the method 400 is described is not intended to be construed as a limitation, and any number of the described method blocks can be combined in any order to implement the method 400 or alternate methods. Additionally, individual blocks may be deleted from the method 400 without departing from the spirit and scope of the subject matter described herein. Furthermore, the method can be implemented in any suitable hardware, software, firmware, or combination thereof. However, for ease of explanation, in the embodiments described below, the method 400 may be considered to be implemented in the above described system 102.

At block 402, a page may be identified which a user may be referring while accessing a learning source 302. The learning source 302 may comprises a paper text books, articles, research paper, white paper, e-articles, e-books, video courses, presentations, internet web pages, intranet web pages, computer-based training (CBT) course, learning management software (LMS) or other types of learning sources.

At block 404, topics may be extracted from the page identified. The topics may be extracted based on a subject referred by the user. For example, for the subject like "History", the topics extracted may be events, places and people, where the event may be "The battle of Panipat", the place may "Agra" and the name may be "Genghis Khan".

At block 406, layers may be generated corresponding to the topics extracted, and the topics are associated with a particular subject of user's interest. In one example, the layers generated for the subject "History" may be Wikipedia, Videos, Pictures, Blogs, Books, Legacy, Art and Literature, Map, Timeline, Presentations, Lectures, Forums and Thesaurus. According to the embodiments of the present subject matter, the layers may be defined as different categories of information being clubbed in a particular format.

At block 408, a profile of the user may be generated based on one or more attributes indicating a learning style of the user.

At block 410, a search may be performed on one or more resources based on the topics extracted. Further, the search performed results in retrieval of the learning content.

At block 412, the learning contents retrieved may be populated in the information layers generated at the block 406. Thus, the populating of the learning contents facilitates arrangement of the learning contents in a structured manner.

At block 414, the learning contents populated in the information layers may get matched with the profile of a user stored in user profile database 228. Based on the matching, the layers get prioritized according to the profile of the user. Thus, based on the matching done, a learning content may be personalized and displayed to the user. Thus, the learning content may be specific to the user's requirement or user's learning style/capability.

Although implementations for methods and systems for providing a personalized learning content have been described in language specific to structural features and/or methods, it is to be understood that the appended claims are not necessarily limited to the specific features or methods described. Rather, the specific features and methods are disclosed as examples of implementations for determining the personalized learning content based on profile of the user and displaying such personalized learning content to the user.

## Claims

1. A method for delivering a learning content to a user, the method comprising:
identifying, by a processor, a page referred by the user while accessing a learning source;
extracting, by the processor, one or more topics from the page identified, wherein the one or more topics are associated with a particular subject of user's interest;
generating, by the processor,
one or more information layers corresponding to the one or more topics, wherein the one or more information layers indicates meaningful abstraction of information related to the one or more topics, and
a profile of the user based on one or more attributes indicating a learning style of the user;
performing, by the processor, a search on one or more resources based on the one or more topics extracted, wherein the search performed results in retrieval of the learning content;
populating, by the processor, the one or more information layers with the learning content; and
delivering, by the processor, via the one or more information layers, the learning content to the user based upon the profile of the user.

2. The method of claim 1, wherein the page is identified by matching the page with a reference page stored in a learning content database 224.

3. The method of claim 1, wherein the learning source comprises at least one of a physical text book, articles, research paper, white paper, e-articles, an e-book, a video course, a presentation, internet web pages, intranet web pages, computer-based training (CBT) course, and learning management software (LMS).

4. The method of claim 1, wherein the one or more topics are extracted from the page using Named Entity Recognition (NER).

5. The method of claim 1, wherein the one or more attributes comprises at least one of an extravert, an introvert, sensing, an intuition, thinking, feeling, judging, and perceiving.

6. A system 102 for delivering a learning content to a user, the system 102 comprising:
a processor 202;
a memory 206 coupled to the processor 202, wherein the processor 202 is capable for executing a plurality of modules 208 stored in the memory 206, and wherein the plurality of modules 208 comprising:
an extracting module 210 configured to
identify a page referred by the user while accessing a learning source, and
extract one or more topics from the page identified, wherein the one or more topics are associated with a particular subject of user's interest;
a generating module 212 configured to generate
one or more information layers corresponding to the one or more topics, wherein the one or more information layers indicates meaningful abstraction of information related to the one or more topics, and
a profile of the user based on one or more attributes indicating a learning style of the user;
search module 214 configured to perform a search on one or more resources based on the one or more topics extracted, wherein the search performed results in retrieval of the learning content;
a populating module 216 configured to populate the one or more information layers with the learning content; and
delivery module 218 configured to deliver, via the one or more information layers, the learning content to the user based upon the profile of the user.

7. The system 102 of claim 6, wherein the page is identified by matching the page with a reference page stored in a learning content database 224.

8. The system 102 of claim 6, wherein the wherein the learning source comprises at least one of a physical text book, articles, research paper, white paper, e-articles, an e-book, a video course, a presentation, internet web pages, intranet web pages, computer-based training (CBT) course, and learning management software (LMS).

9. The system 102 of claim 6, wherein the one or more topic is extracted from the page using Named Entity Recognition (NER).

10. The system 102 of claim 6, wherein the one or more attributes comprises at least one of an extravert, an introvert, sensing, an intuition, thinking, feeling, judging, and perceiving.

11. A non-transitory computer readable medium embodying a program executable in a computing device for delivering a learning content to a user, the non-transitory computer readable medium comprising a set of instructions, the instructions comprising instructions for:
identifying a page referred by the user while accessing a learning source;
extracting one or more topics from the page identified, wherein the one or more topics are associated with a particular subject of user's interest;
generating
one or more information layers corresponding to the one or more topics, wherein the one or more information layers indicates meaningful abstraction of information related to the one or more topics, and
a profile of the user based on one or more attributes indicating a learning style of the user;
performing a search on one or more resources based on the one or more topics extracted, wherein the search performed results in retrieval of the learning content;
populating the one or more information layers with the learning content; and
delivering, via the one or more information layers, the learning content to the user based upon the profile of the user.
